# EUROPEAN PATENT SPECIFICATION

(11) **EP 4 589 372 B1**
(45) Date of publication and mention of the grant of the patent: **08.07.2026**
(21) Application number: 24382055.2
(22) Date of filing: 22.01.2024
(51) Int. Cl.: G02F 1/133, G02F 1/1343, B60J 3/04, E06B 3/67, E06B 9/24, G09G 3/00, G09F 9/35, G02F 1/1333, G02F 1/1334, G09G 3/36

(54) **FILM DEVICE FOR PRIVACY AND HEATING USES AND METHOD OF USE**
FILMVORRICHTUNG FÜR PRIVATSPHÄREN- UND HEIZVERWENDUNGEN UND VERFAHREN ZUR VERWENDUNG
DISPOSITIF DE FILM POUR UTILISATIONS DE PROTECTION DE LA VIE PRIVÉE ET DU CHAUFFAGE ET PROCÉDÉ D'UTILISATION

(43) Date of publication of application: 23.07.2025
(73) Proprietor: Dream Glass S. L., 28860 Paracuellos De Jarama (ES)
(72) Inventor: MESHKAT MAMALEK, Mojtaba, 28860 Paracuellos De Jarama (ES); FEIXAS IBÁÑEZ, Enric, 08912 Badalona (ES)
(74) Representative: TRBL Intellectual Property

(56) References cited:
- JP-A- 2016 143 511
- KR-A- 20170 001 396
- US-A1- 2016 179 259
- US-A1- 2017 108 753
- US-A1- 2021 011 315

## Description

### TECHNICAL FIELD

This invention belongs to the field of smart films comprising components which provide different uses and applications.

### STATE OF THE ART

Smart film and glaze systems are usually employed in producing immediate privacy and or images of attractions applied in partitioning and windows of showrooms, exhibitions, hotels, automotive industries with further applications as the barrier of ultraviolet (UV) and infrared (IR) rays to save energy and bring comfort to the applied spaces.

As a specific example of switchable smart film and glaze, the polymer-dispersed liquid crystals (PDLC) herewith studied. The device can convert transparent sections of substrate to opaque and vice-versa by controlling each section independently or converting the sections to semi-opaque depending on the states of the liquid crystals.

Document KR 2017 0001396 A discloses a liquid crystal cell and a use thereof. The liquid crystal cell implement a bistable mode switching between a haze mode and a transmissive mode, or between a non-haze mode and a transmissive mode with only a low driving voltage and temperature. Such a liquid crystal cell can be applied to various optical modulation devices such as a smart window, a window protective film, a flexible display device, an active retarder for 3D image display, or a viewing angle adjusting film.

Document US 2016/179259 A1 discloses an input device which comprises a plurality of conductive layers arranged in a matrix with an outline including a linear portion parallel to a direction along an outline of a display region of a display portion and linear portions of adjacent two conductive layers face each other. Furthermore, in the plurality of conductive layers arranged in a matrix, a plurality of conductive layers arranged in a line in an oblique direction to the outline of the display portion are electrically connected to each other. Alternatively, a plurality of conductive layers arranged in a zigzag line along the outline of the display portion are electrically connected to each other.

Document US 2021/011315 A1 discloses a variable transparency glass which includes a first film having a first transparent electrode on an inner surface of the first film, a second film having a second transparent electrode on an inner surface of the second film, and a liquid crystal capsule disposed between the first film and the second film. The variable transparency glass is configured to control transmittance of an incident light in response to a voltage applied to each of the first transparent electrode and the second transparent electrode. The transmittance is partially controlled corresponding to an aligning pattern of each of the first transparent electrode and the second transparent electrode when the first film and the second film overlap.

Document JP 2016 143511 A discloses a laminated glass with a pair of glass plates and a conductive heating element disposed between the pair of glass plates. The conductive heating element has first and second electrodes extending along two confronting end sides of the pair of glass plates, and a plurality of first conductors integrally moulded with the first and second electrodes. As to each of the plurality of first conductors, one end part thereof is connected to the first electrode, the other end part is connected to the second electrode, a width of each of the plurality of first conductors in a lateral direction is not uniform in a longitudinal direction thereof, and both end faces of each of the plurality of first conductors in the longitudinal direction stretch in a zigzag.

Document US 2017/108753 A1 discloses a variable transmittance optical filter comprising: a first layer comprising a first substantially transparent substrate with a substantially coplanar electrode system disposed thereon, the substantially coplanar electrode system made of transparent electrically conductive material and comprising at least one pair of electrically separate electrodes arranged in a substantially coplanar manner on the first substantially transparent substrate, each pair of electrically separate electrodes comprising a first electrode and a second electrode, a second layer proximate to the first layer and comprising a transition material that darkens in response to a non-electrical stimulus and lightens in response to application of an electric voltage; and an electrical connection system for electrically connecting the SC electrode system to a source of electric voltage.

The present invention uses this technology, but provides an advantageous system which improves the use and final result of the device.

### DESCRIPTION OF THE INVENTION

The invention provides an alternative solution for smart film displays by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a film device comprising
a first transparent conductive electrode;
a second transparent conductive electrode;
an active optic material arranged between the first transparent conductive electrode and the second transparent conductive electrode, wherein the active optic material is configured to change at least one optical property when subject to an electrical voltage; wherein
the first transparent conductive electrode comprises a first electric contact configured to receive an electric supply and a second electric contact configured to receive an electric supply,
the first transparent conductive electrode is etched with a plurality of etching lines to form an electric path from the first electric contact to the second electric contact, wherein at least one of the etching lines starts in a first edge of the first transparent conductive electrode and at least other one of the etching lines starts in a second edge opposite to the first edge, so that the electric path is continuous and covers all the surface of the first transparent conductive electrode;
the second transparent conductive electrode comprises a third electric contact configured to receive an electric supply and a fourth electric contact configured to receive an electric supply, in such a way that the third electric contact overlaps with the first electric contact and the fourth electric contact overlaps with the second electric contact;
the second transparent conductive electrode is etched with a plurality of etching lines to form an electric path from the third electric contact to the fourth electric contact, wherein the etching lines of the second transparent conductive electrode define an electric path which overlaps with the electric path of the first transparent conductive electrode.

The first and the second transparent conductive electrodes have the same etching pattern, so that they overlap when installed in the film device. This etching pattern is formed by a plurality of etching lines. The etching lines define an electric path, since the conductive electrode is transformed in a continuous path which goes from one electric contact to the other electric contact, in such a way that when a voltage is established between these two electric contacts, an electric current runs along the path: the surface of each transparent conductive electrode is not all at the same electric potential, but a current runs along the electric path. The etching is performed so that the path is extended over all the surface of the corresponding transparent conductive electrode. To do so, at least one of the etching lines starts in a first edge of the first transparent conductive electrode and at least other one of the etching lines starts in a second edge opposite to the first edge. All of the etching lines starts in an edge of the corresponding conductive electrode, but ends in a point which is not part of an edge (this means that none of the etching lines completely divides the corresponding electrode: no etching lines goes "from edge to edge", but all of them starts or ends in an edge).

Further, since each conductive electrode may have a different voltage pattern, a voltage different may be established between the electrodes, causing the active optical material to change its optical properties. Hence, two effects are obtained: a heating effect caused by Joule effect of the current along the electric path and a transparency-opacity effect caused by the behaviour of the active optical material.

Hence, this film device may be used in different modes: the fact that the electrodes are disposed so that a current may run along their surfaces allows the film device to be used as a heating element, and the fact that there are two electrodes which enclose the active optic material allows it to be used as a transparency management device (if a voltage is established between the two electrodes, the active optic material becomes transparent, and if not, it remains opaque or translucid).

In some particular embodiments, the active optic material is a polymer dispersed liquid crystal film.

In some particular embodiments, the first transparent conductive electrode and/or the second transparent conductive electrode comprises Indium Tin Oxide, silver nanowires, carbon nanotubes, graphene, transparent conductive polymers or nanometals.

These examples correspond to materials which provide a good compromise between transparency and electric conductivity.

In some particular embodiments, the film device further comprises a first transparent substrate and a second transparent substrate, wherein the first transparent electrode is deposited on the first transparent substrate and the second transparent electrode is deposited on the second transparent substrate.

Transparent substrates provide a support so that the film device may be more easily handled.

In some particular embodiments, the first transparent substrate and/or the second transparent substrate comprises a glass or a polymeric substance, such as polyethylene terephthalate.

A glass is useful to install the optical arrangement in a building, where a physical separation is needed between two different spaces, and there are different needs of transparency and intimacy. A flexible arrangement, such as this polymeric example, may be attached to structures which are already built, thus conferring all the advantages of the invention without the need of re-installing the complete structure.

In some particular embodiments, the film device further comprises an anti-reflecting coating deposited on the first face of the first transparent substrate and/or on the second face of the second transparent substrate.

An anti-reflecting coating is also advantageous in some outdoor applications, where this invention can be used.

In some particular embodiments, the etching lines of the first transparent conductive electrode are parallel.

Parallel etching lines are easy to create, so this embodiment is simple and easy to obtain. Further, parallel lines create straight paths, which have a more predictable electric behaviour.

In some particular embodiments, the distance between a pair of adjacent etching lines is the same as the distance between a different pair of adjacent etching lines.

This makes the electric path have a constant width, which have a predictable behaviour.

In a second inventive aspect, the invention provides a film assembly comprising
a film device according to the first inventive aspect; and
a power unit configured to provide a first electric signal to the first electric contact, a second electric signal to the second electric contact, a third electric signal to the third electric contact and a fourth electric signal to the fourth electric contact.

In a further inventive aspect, the invention provides a vehicle comprising a transparent surface and a film device according to the first inventive aspect or a film assembly according to the second inventive aspect, wherein the film device is adhered to the transparent surface.

In an even further inventive aspect, the invention provides a method for using a film assembly according to the second inventive aspect, the method comprising the steps of supplying a first signal to the first electrode, a second signal to the second electrode, a third signal to the third electrode and a fourth signal to the fourth electrode, wherein
in a first configuration designed to provide heating and transparency, the first signal is a first square wave between a bottom value and a top value, the second signal is a continuous signal of the bottom value, the third signal is the same as the second signal and the fourth signal is the negative of the first signal;
in a first configuration designed to provide heating and privacy, the first signal is a first square wave between a bottom value and a top value, the second signal is the negative of the first signal, the third signal is the same as the first signal and the fourth signal is the same as the second signal; and
in a first configuration designed to provide transparency without heating, the first signal is a first square wave between a bottom value and a top value, the second signal is the same as the first signal, the third signal is the negative of the first signal and the fourth signal is the same as the third signal.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a side view of a film device according to the invention.
Figure 2 shows a top view of the film device, so that the first transparent conductive electrode is seen.
Figure 3 shows a bottom view of this device, so that the second transparent conductive electrode is seen.
Figure 4 shows a first embodiment where the device is installed on a glass or windowpane of a vehicle.
Figures 5a, 5b and 5c show the different electric signals supplied to the first electric contact, the second electric contact, the third electric contact and the fourth electric contact in different scenarios.
Figure 6 shows a side view of a different embodiment of a film device according to the invention.

In these figures, the following reference numbers have been used:
- 1: First transparent electrode
- 2: Second transparent electrode
- 3: PDLC layer
- 4: First electric contact
- 5: Second electric contact
- 6: Electric path of the first transparent electrode
- 7: Third electric contact
- 8: Power unit
- 10: Windowpane
- 11: First transparent substrate
- 12: Second transparent substrate
- 13: Fourth electric contact
- 14: Etching lines
- 15: Electric path of the second transparent electrode
- 100: Vehicle

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

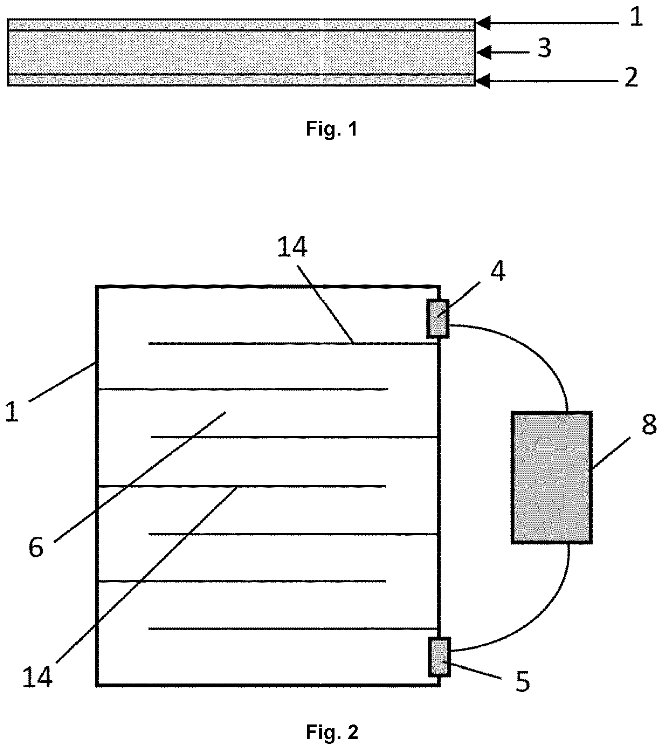

Figure 1 shows a side view of a film device according to the invention. In this view, the following layers are seen:
a first transparent conductive electrode 1;
a second transparent conductive electrode 2;
a polymer dispersed liquid crystal film (PDLC) 3 arranged between the first transparent conductive electrode 1 and the second transparent conductive electrode 2.

The PDLC is a particular type of an active optic material, which is configured to change at least one optical property when subject to an electrical voltage. In this case, where a voltage is applied between the two electrodes surrounding the PDLC, the PDLC becomes transparent. If no voltage is applied, the PDLC remains opaque or translucid.

Figure 2 shows a top view of the film device, so that the first transparent conductive electrode 1 is seen.

This first transparent conductive electrode 1 comprises a first electric contact 4 configured to receive a first electric signal and a second electric contact 5 configured to receive a second electric signal.

This first transparent conductive electrode 1 is etched with a plurality of etching lines to form an electric path 6 which starts in the first electric contact 4 and ends in the second electric contact 5, wherein the electric path covers all the surface of the first transparent conductive electrode 1.

As seen in this figure, the etching is done so that the surface is not divided into different electric zones (there are not any isolated or closed regions in the surface of the first transparent conductive electrode) but the path runs along the entirety of the surface of the first transparent conductive electrode 1. This is because all the etching lines 14 starts in an edge of the first conductive electrode 1, but ends in a point which is not part of an edge. As seen in this figure, there are three etching lines 14 which starts in the left edge and another four etching lines 14 which start in the right edge. But none of the etching lines completely divides the first transparent conductive electrode 1: no etching lines goes "from edge to edge". In fact, the left edge and the right edge are opposite edges, so that a continuous electric path 6 is created by these etching lines.

These etching lines 14 are parallel and are equidistant: the distance between a pair of adjacent etching lines is the same as the distance between a different pair of adjacent etching lines. Hence, the width of the continuous electric path 6 is constant.

This first transparent conductive electrode 1 comprises Indium Tin Oxide, although different embodiments, such as silver nanowires, carbon nanotubes, graphene, transparent conductive polymers or nanometals could also be used.

In this figure, there is also a power unit 8 which is connected to the first electric contact 4 and to the second electric contact 5, to provide different voltage depending on the mode required by the user.

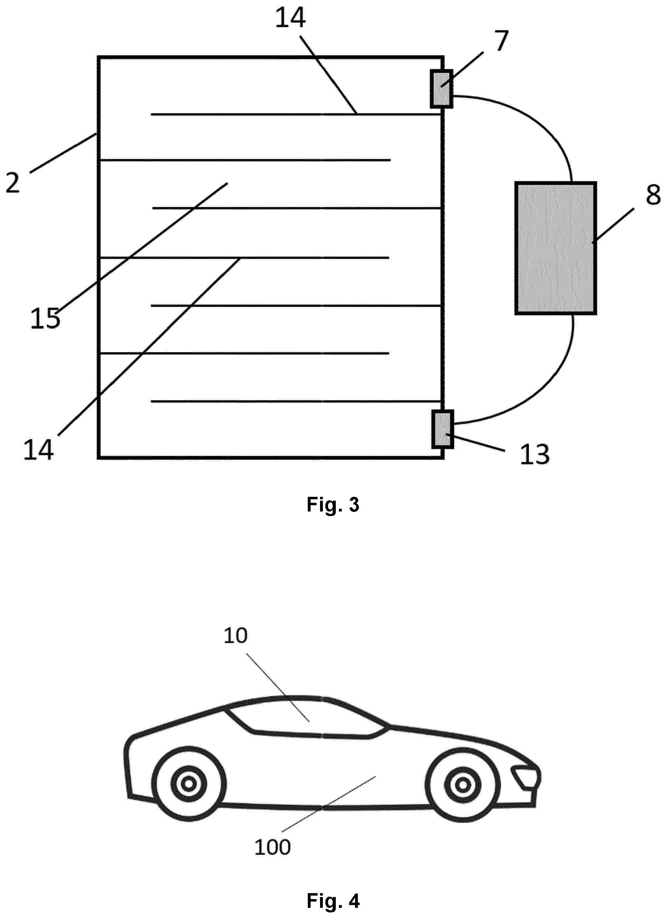

Figure 3 shows a bottom view of this device, so that the second transparent conductive electrode 2 is seen.

This second transparent conductive electrode 2 is a copy of the first one shown in the previous figure. In this case, the second transparent conductive electrode 2 comprises a third electric contact 7 configured to receive a third electric signal and a fourth electric contact 13 configured to receive a fourth electric signal.

In this figure, the power unit 8 is seen as also connected to the third electric contact 7 and to the fourth electric contact 13.

As in the case of the first conductive electrode 1, all the etching lines 14 starts in an edge of the second conductive electrode 2, but ends in a point which is not part of an edge: no etching lines goes "from edge to edge". These etching lines 14 are also parallel and are equidistant, so that a continuous electric path 15 with a constant width is created by these etching lines.

Different embodiments may be manufactured with such a device.

Figure 4 shows a first embodiment where the device is installed on a glass or windowpane 10 of a vehicle 100. With this device, heating of the glass 10 may be achieved at the same time as privacy setting.

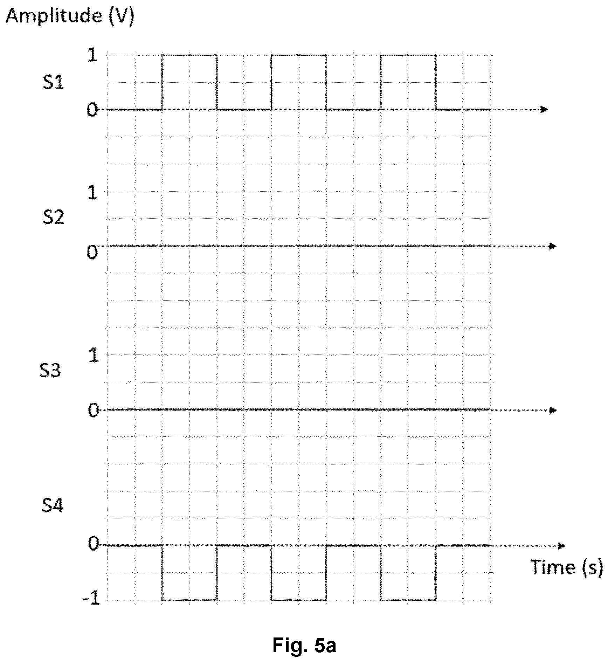

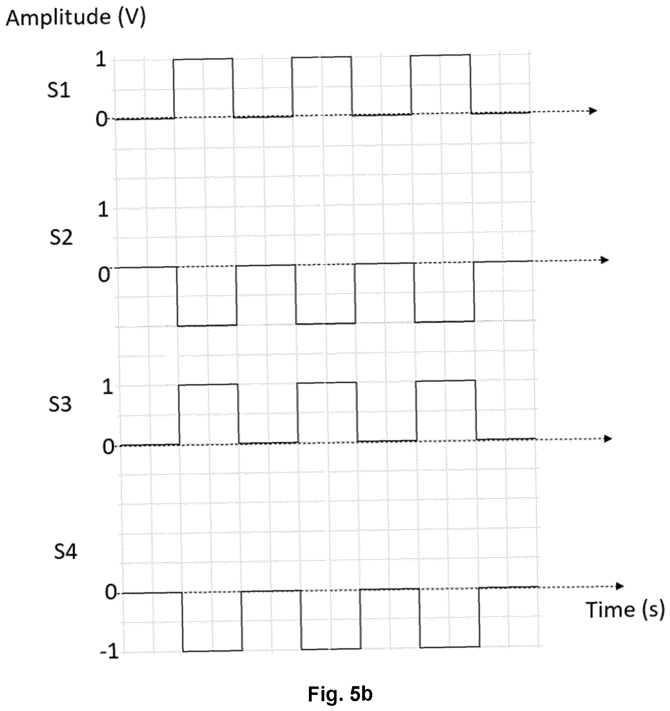

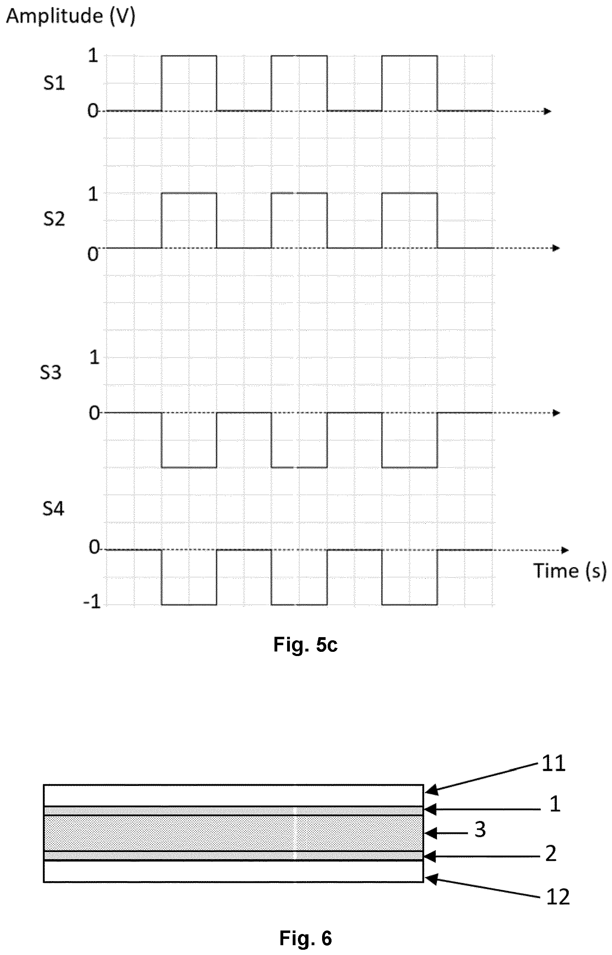

Figures 5a, 5b and 5c show the different electric signals supplied to the first electric contact, the second electric contact, the third electric contact and the fourth electric contact in different scenarios.

Figure 5a shows a first scenario where the user requires heating and transparency. To do so, the first electric contact is fed with a first electric signal which is a first square wave S1. This square wave has a bottom value and a top value. The second electric contact is fed with a second electric signal S2 which is a continuous signal of the bottom value. Hence, a voltage is established between the first and second electric contacts, thus inducing a current which will provoke heating in the film. The third electric contact is fed with a third signal S3 which is the same as the second signal and the fourth electric contact is fed with a fourth signal S4 which is the negative of the first signal S1. A voltage is also established between the third and the fourth electric contacts, thus inducing a current which will provoke heating in the film. Also, a voltage is created between the first and the second conductive electrodes, because the signal of overlapping electrodes are not the same. This will cause transparency in the PDLC layer.

Figure 5b shows a second scenario where the user requires heating and privacy (opacity). To do so, the first electric contact is fed with a first electric signal S1 which is a first square wave. This square wave has a bottom value and a top value. The second electric contact is fed with a second electric signal S2 which is the negative of the first electric signal. Hence, a voltage is established between the first and second electric contacts, thus inducing a current which will provoke heating in the film. The third electric contact is fed with a third signal S3 which is the same as the first signal and the fourth electric contact is fed with a fourth signal S4 which is the same as the second signal. A voltage is also established between the third and the fourth electric contacts, thus inducing a current which will provoke heating in the film. However, since the electric signal of overlapping electrodes is the same, the PDLC layer will not undergo any voltage between the conductive electrodes, so it will remain opaque.

Figure 5c shows a third scenario where the user requires transparency without heating. To do so, the first electric contact is fed with a first electric signal S1 which is a first square wave. This square wave has a bottom value and a top value. The second electric contact is fed with a second electric signal S2 which is the same as the first signal. The third electric contact is fed with a third signal S3 which is the negative of the first signal and the fourth electric contact is fed with a fourth signal S4 which is the same as the third signal. A voltage is created between the first and the second conductive electrodes, because the signal of overlapping electrodes are not the same. This will cause transparency in the PDLC layer.

Figure 6 shows a side view of a different embodiment of a film device according to the invention. In this embodiment, that would work in the same way, the device further comprises a first transparent substrate 11 and a second transparent substrate 12. The first transparent electrode 1 is deposited on the first transparent substrate 11 and the second transparent electrode 2 is deposited on the second transparent substrate 12.

With this embodiment, the resulting arrangement may be installed elsewhere; in houses, offices or any place where the described features are advantageous.

## Claims

1. Film device comprising
a first transparent conductive electrode (1);
a second transparent conductive electrode (2);
an active optic material (3) arranged between the first transparent conductive electrode (1) and the second transparent conductive electrode (2), wherein the active optic material (3) is configured to change at least one optical property when subject to an electrical voltage; wherein
the first transparent conductive electrode (1) comprises a first electric contact (4) configured to receive an electric supply and a second electric contact (5) configured to receive an electric supply,
the first transparent conductive electrode (1) is etched with a plurality of etching lines (14) to form an electric path (6) from the first electric contact (4) to the second electric contact (5), wherein at least one of the etching lines starts in a first edge of the first transparent conductive electrode (1) and at least other one of the etching lines starts in a second edge opposite to the first edge, so that the electric path is continuous and covers all the surface of the first transparent conductive electrode (1);
the second transparent conductive electrode (2) comprises a third electric contact (7) configured to receive an electric supply and a fourth electric contact (13) configured to receive an electric supply, in such a way that the third electric contact (7) overlaps with the first electric contact (4) and the fourth electric contact (13) overlaps with the second electric contact (5);
the second transparent conductive electrode (2) is etched with a plurality of etching lines (14) to form an electric path (15) from the third electric contact (7) to the fourth electric contact (13), wherein the etching lines (14) of the second transparent conductive electrode (2) define an electric path (15) which overlaps with the electric path (6) of the first transparent conductive electrode (1).

2. Film device according to claim 1, wherein the active optic material (3) is a polymer dispersed liquid crystal film.

3. Film device according to any of the preceding claims, wherein the first transparent conductive electrode (1) and/or the second transparent conductive electrode (2) comprises Indium Tin Oxide, silver nanowires, carbon nanotubes, graphene, transparent conductive polymers or nanometals.

4. Film device according to any of the preceding claims, further comprising a first transparent substrate (11) and a second transparent substrate (12), wherein the first transparent electrode is deposited on the first transparent substrate (11) and the second transparent electrode is deposited on the second transparent substrate (12).

5. Film device according to claim 4, wherein the first transparent substrate (11) and/or the second transparent substrate (12) comprises a glass or a polymeric substance, such as polyethylene terephthalate.

6. Film device according to any of claims 4 to 5, further comprising an anti-reflecting coating (9) deposited on the first face of the first transparent substrate (11) and/or on the second face of the second transparent substrate (12).

7. Film device according to any of the preceding claims, wherein the etching lines (14) of the first transparent conductive electrode (1) are parallel.

8. Film device according to claim 7, wherein the distance between a pair of adjacent etching lines (14) is the same as the distance between a different pair of adjacent etching lines.

9. Film assembly comprising
a film device according to any of the preceding claims; and
a power unit (8) configured to provide a first electric signal to the first electric contact (4), a second electric signal to the second electric contact (5), a third electric signal to the third electric contact (7) and a fourth electric signal to the fourth electric contact (13).

10. Vehicle comprising a transparent surface and a film device according to any of claims 1 to 8 or a film assembly according to claim 9, wherein the film device is adhered to the transparent surface.

11. Method for using a film assembly according to claim 9, the method comprising the steps of supplying a first signal to the first electrode, a second signal to the second electrode, a third signal to the third electrode and a fourth signal to the fourth electrode, wherein
in a first configuration designed to provide heating and transparency, the first signal (S1) is a first square wave between a bottom value and a top value, the second signal (S2) is a continuous signal of the bottom value, the third signal (S3) is the same as the second signal and the fourth signal (S4) is the negative of the first signal;
in a first configuration designed to provide heating and privacy, the first signal (S1) is a first square wave between a bottom value and a top value, the second signal (S2) is the negative of the first signal, the third signal (S3) is the same as the first signal and the fourth signal (S4) is the same as the second signal; and
in a first configuration designed to provide transparency without heating, the first signal (S1) is a first square wave between a bottom value and a top value, the second signal (S2) is the same as the first signal, the third signal (S3) is the negative of the first signal and the fourth signal (S4) is the same as the third signal.

## Patentansprüche

1. Filmvorrichtung, umfassend
eine erste transparente leitfähige Elektrode (1);
eine zweite transparente leitfähige Elektrode (2);
ein aktives optisches Material (3), das zwischen der ersten transparenten leitfähigen Elektrode (1) und der zweiten transparenten leitfähigen Elektrode (2) angeordnet ist, wobei das aktive optische Material (3) dazu konfiguriert ist, mindestens eine optische Eigenschaft zu ändern, wenn es einer elektrischen Spannung ausgesetzt wird; wobei
die erste transparente leitfähige Elektrode (1) einen ersten elektrischen Kontakt (4), der dazu konfiguriert ist, eine elektrische Versorgung zu empfangen, und einen zweiten elektrischen Kontakt (5), der dazu konfiguriert ist, eine elektrische Versorgung zu empfangen, umfasst,
die erste transparente leitfähige Elektrode (1) mit einer Vielzahl von Ätzlinien (14) geätzt ist, um einen elektrischen Pfad (6) vom ersten elektrischen Kontakt (4) zum zweiten elektrischen Kontakt (5) zu bilden, wobei mindestens eine der Ätzlinien an einer ersten Kante der ersten transparenten leitfähigen Elektrode (1) beginnt und mindestens eine weitere der Ätzlinien an einer der ersten Kante gegenüberliegenden zweiten Kante beginnt, so dass der elektrische Pfad durchgehend ist und die gesamte Oberfläche der ersten transparenten leitfähigen Elektrode (1) abdeckt;
die zweite transparente leitfähige Elektrode (2) einen dritten elektrischen Kontakt (7), der dazu konfiguriert ist, eine elektrische Versorgung zu empfangen, und einen vierten elektrischen Kontakt (13), der dazu konfiguriert ist, eine elektrische Versorgung zu empfangen, umfasst, so dass der dritte elektrische Kontakt (7) den ersten elektrischen Kontakt (4) überlappt und der vierte elektrische Kontakt (13) den zweiten elektrischen Kontakt (5) überlappt;
die zweite transparente leitfähige Elektrode (2) mit einer Vielzahl von Ätzlinien (14) geätzt ist, um einen elektrischen Pfad (15) vom dritten elektrischen Kontakt (7) zum vierten elektrischen Kontakt (13) zu bilden, wobei die Ätzlinien (14) der zweiten transparenten leitfähigen Elektrode (2) einen elektrischen Pfad (15) definieren, der sich mit dem elektrischen Pfad (6) der ersten transparenten leitfähigen Elektrode (1) überlappt.

2. Filmvorrichtung nach Anspruch 1, wobei das aktive optische Material (3) einem Film aus polymerdispergiertem Flüssigkristall ist.

3. Filmvorrichtung nach einem der vorhergehenden Ansprüche, wobei die erste transparente leitfähige Elektrode (1) und/oder die zweite transparente leitfähige Elektrode (2) Indium-Zinn-Oxid, Silbernanodrähte, Kohlenstoffnanoröhren, Graphen, transparente leitfähige Polymere oder Nanometalle umfasst.

4. Filmvorrichtung nach einem der vorhergehenden Ansprüche, ferner umfassend ein erstes transparentes Substrat (11) und ein zweites transparentes Substrat (12), wobei die erste transparente Elektrode auf dem ersten transparenten Substrat (11) aufgebracht ist und die zweite transparente Elektrode auf dem zweiten transparenten Substrat (12) aufgebracht ist.

5. Filmvorrichtung nach Anspruch 4, wobei das erste transparente Substrat (11) und/oder das zweite transparente Substrat (12) ein Glas oder eine polymere Substanz, wie etwa Polyethylenterephthalat, umfasst.

6. Filmvorrichtung nach einem der Ansprüche 4 bis 5, ferner umfassend eine antireflektierende Beschichtung (9), die auf der ersten Seite des ersten transparenten Substrats (11) und/oder auf der zweiten Seite des zweiten transparenten Substrats (12) aufgebracht ist.

7. Filmvorrichtung nach einem der vorhergehenden Ansprüche, wobei die Ätzlinien (14) der ersten transparenten leitfähigen Elektrode (1) parallel verlaufen.

8. Filmvorrichtung nach Anspruch 7, wobei die Entfernung zwischen einem Paar benachbarter Ätzlinien (14) gleich der Entfernung zwischen einem unterschiedlichen Paar benachbarter Ätzlinien ist.

9. Filmanordnung, umfassend
eine Filmvorrichtung nach einem der vorhergehenden Ansprüche; und
eine Stromversorgungseinheit (8), die dazu konfiguriert ist, ein erstes elektrisches Signal an den ersten elektrischen Kontakt (4), ein zweites elektrisches Signal an den zweiten elektrischen Kontakt (5), ein drittes elektrisches Signal an den dritten elektrischen Kontakt (7) und ein viertes elektrisches Signal an den vierten elektrischen Kontakt (13) bereitzustellen.

10. Fahrzeug, umfassend eine transparente Oberfläche und eine Filmvorrichtung nach einem der Ansprüche 1 bis 8 oder eine Filmanordnung nach Anspruch 9, wobei die Filmvorrichtung an der transparenten Oberfläche haftet.

11. Verfahren zur Verwendung einer Filmanordnung nach Anspruch 9, wobei das Verfahren die Schritte des Zuführens eines ersten Signals zur ersten Elektrode, eines zweiten Signals zur zweiten Elektrode, eines dritten Signals zur dritten Elektrode und eines vierten Signals zur vierten Elektrode umfasst, wobei
in einer ersten Konfiguration, die dazu ausgelegt ist, Erwärmung und Transparenz bereitzustellen, das erste Signal (S1) eine erste Rechteckwelle zwischen einem unteren Wert und einem oberen Wert ist, das zweite Signal (S2) ein kontinuierliches Signal des unteren Werts ist, das dritte Signal (S3) das gleiche wie das zweite Signal ist und das vierte Signal (S4) das negative des ersten Signals ist;
in einer ersten Konfiguration, die dazu ausgelegt ist, Erwärmung und Privatsphäre bereitzustellen, das erste Signal (S1) eine erste Rechteckwelle zwischen einem unteren Wert und einem oberen Wert ist, das zweite Signal (S2) das negative des ersten Signals ist, das dritte Signal (S3) das gleiche wie das erste Signal ist und das vierte Signal (S4) das gleiche wie das zweite Signal ist; und
in einer ersten Konfiguration, die dazu ausgelegt ist, Transparenz ohne Erwärmung bereitzustellen, das erste Signal (S1) eine erste Rechteckwelle zwischen einem unteren Wert und einem oberen Wert ist, das zweite Signal (S2) das gleiche wie das erste Signal ist, das dritte Signal (S3) das negative des ersten Signals ist und das vierte Signal (S4) das gleiche wie das dritte Signal ist.

## Revendications

1. Dispositif à film comprenant
une première électrode conductrice transparente (1) ;
une deuxième électrode conductrice transparente (2) ;
un matériau optique actif (3) agencé entre la première électrode conductrice transparente (1) et la deuxième électrode conductrice transparente (2), dans lequel le matériau optique actif (3) est configuré pour modifier au moins une propriété optique lorsqu'il est soumis à une tension électrique ; dans lequel
la première électrode conductrice transparente (1) comprend un premier contact électrique (4) configuré pour recevoir une alimentation électrique et un deuxième contact électrique (5) configuré pour recevoir une alimentation électrique,
la première électrode conductrice transparente (1) est gravée avec une pluralité de lignes de gravure (14) afin de former un trajet électrique (6) depuis le premier contact électrique (4) jusqu'au deuxième contact électrique (5), dans lequel au moins une des lignes de gravure débute sur un premier bord de la première électrode conductrice transparente (1) et au moins une autre des lignes de gravure débute sur un deuxième bord opposé au premier bord, de sorte que le trajet électrique est continu et couvre toute la surface de la première électrode conductrice transparente (1) ;
la deuxième électrode conductrice transparente (2) comprend un troisième contact électrique (7) configuré pour recevoir une alimentation électrique et un quatrième contact électrique (13) configuré pour recevoir une alimentation électrique, de telle manière que le troisième contact électrique (7) chevauche le premier contact électrique (4) et que le quatrième contact électrique (13) chevauche le deuxième contact électrique (5) ;
la deuxième électrode conductrice transparente (2) est gravée avec une pluralité de lignes de gravure (14) afin de former un trajet électrique (15) depuis le troisième contact électrique (7) jusqu'au quatrième contact électrique (13), dans lequel les lignes de gravure (14) de la deuxième électrode conductrice transparente (2) définissent un trajet électrique (15) qui chevauche le trajet électrique (6) de la première électrode conductrice transparente (1).

2. Dispositif à film selon la revendication 1, dans lequel le matériau optique actif (3) est un film à cristaux liquides dispersés dans un polymère.

3. Dispositif à film selon l'une quelconque des revendications précédentes, dans lequel la première électrode conductrice transparente (1) et/ou la deuxième électrode conductrice transparente (2) comprend de l'oxyde d'indium-étain, des nanofils d'argent, des nanotubes de carbone, du graphène, des polymères conducteurs transparents ou des nanométaux.

4. Dispositif à film selon l'une quelconque des revendications précédentes, comprenant en outre un premier substrat transparent (11) et un deuxième substrat transparent (12), dans lequel la première électrode transparente est déposée sur le premier substrat transparent (11) et la deuxième électrode transparente est déposée sur le deuxième substrat transparent (12).

5. Dispositif à film selon la revendication 4, dans lequel le premier substrat transparent (11) et/ou le deuxième substrat transparent (12) comprend du verre ou une substance polymère, telle que du polyéthylène téréphtalate.

6. Dispositif à film selon l'une quelconque des revendications 4 à 5, comprenant en outre un revêtement antireflet (9) déposé sur la première face du premier substrat transparent (11) et/ou sur la deuxième face du deuxième substrat transparent (12).

7. Dispositif à film selon l'une quelconque des revendications précédentes, dans lequel les lignes de gravure (14) de la première électrode conductrice transparente (1) sont parallèles.

8. Dispositif à film selon la revendication 7, dans lequel la distance entre une paire de lignes de gravure adjacentes (14) est identique à la distance entre une autre paire de lignes de gravure adjacentes.

9. Ensemble à film comprenant
un dispositif à film selon l'une quelconque des revendications précédentes ; et
une unité d'alimentation (8) configurée pour fournir un premier signal électrique au premier contact électrique (4), un deuxième signal électrique au deuxième contact électrique (5), un troisième signal électrique au troisième contact électrique (7) et un quatrième signal électrique au quatrième contact électrique (13).

10. Véhicule comprenant une surface transparente et un dispositif à film selon l'une quelconque des revendications 1 à 8 ou un ensemble à film selon la revendication 9, dans lequel le dispositif à film est fixé à la surface transparente.

11. Procédé d'utilisation d'un ensemble à film selon la revendication 9, le procédé comprenant les étapes consistant à fournir un premier signal à la première électrode, un deuxième signal à la deuxième électrode, un troisième signal à la troisième électrode et un quatrième signal à la quatrième électrode, dans lequel
dans une première configuration conçue pour fournir un chauffage et une transparence, le premier signal (S1) est une première onde carrée entre une valeur basse et une valeur haute, le deuxième signal (S2) est un signal continu de la valeur basse, le troisième signal (S3) est identique au deuxième signal et le quatrième signal (S4) est l'opposé du premier signal ;
dans une première configuration conçue pour fournir un chauffage et une confidentialité, le premier signal (S1) est une première onde carrée entre une valeur basse et une valeur haute, le deuxième signal (S2) est l'opposé du premier signal, le troisième signal (S3) est identique au premier signal et le quatrième signal (S4) est identique au deuxième signal ; et
dans une première configuration conçue pour fournir une transparence sans chauffage, le premier signal (S1) est une première onde carrée entre une valeur basse et une valeur haute, le deuxième signal (S2) est identique au premier signal, le troisième signal (S3) est l'opposé du premier signal et le quatrième signal (S4) est identique au troisième signal.
